(19) Europäisches Patentamt
European Patent Office
Office européen des brevets

(11) **EP 2 182 033 B1**

(12) **EUROPEAN PATENT SPECIFICATION**

(45) Date of publication and mention
of the grant of the patent:
**25.05.2011 Bulletin 2011/21**

(51) Int Cl.:
*C09D 5/00* (2006.01)      *C09D 5/03* (2006.01)
*C09D 7/00* (2006.01)      *C09D 7/12* (2006.01)
*C09D 125/04* (2006.01)      *C09D 133/00* (2006.01)

(21) Application number: **08018858.4**

(22) Date of filing: **29.10.2008**

(54) **Low energy coatings**

Beschichtungen mit niedriger Energie

Revêtements à basse énergie

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**05.05.2010 Bulletin 2010/18**

(73) Proprietor: **Akzo Nobel Coatings International B.V.
6824 BM Arnhem (NL)**

(72) Inventors:
• **Barcock, Richard
Bucks
HP22 5YR (GB)**
• **Pearce, Colin
Aylesbury
Bucks HP18 9 DW (GB)**
• **Jefferson, Gary
Reading
Berks
RG30 2SR (GB)**

(74) Representative: **Schalkwijk, Pieter Cornelis et al
Akzo Nobel N.V.
Legal & IP
P.O. Box 9300
6800 SB Arnhem (NL)**

(56) References cited:
**EP-A- 0 113 435          EP-A- 1 371 691
WO-A-2005/083016     US-A- 4 277 385**

**Description**

This invention relates to reduced energy content pigmented coating compositions, especially pigmented paints of low sheen, also known as matt paints. In particular it relates to paints of pigment volume content from 75 to 90% and having sheen of less than 15% when measured at 85°.

Light coloured pigmented paints usually contain high levels of titanium dioxide, $TiO_2$. This is because such pastel shades are predominantly white with a small amount of non-white colour added. Titanium dioxide is the best source of whiteness due to its high refractive index relative to typical binders used in paints. Unfortunately, $TiO_2$ requires large amounts of energy to extract it from the ground and then purify. In fact, in known high pigment volume content (PVC) paints of pastel/light colour, for example matt whites and matt light shades as hereinbelow described, the high $TiO_2$ content used in order to achieve the desired colour and opacity is the main contributor to the total energy content of the paint.

By energy content, we mean the energy required to extract, refine and manufacture the ingredients comprising the paint; and the energy required to manufacture the paint itself.

Since most energy is generated by burning fossil fuel, high energy content usually results in high carbon dioxide emissions- hence the use of the alternative measure 'embedded $CO_2$' to indicate the energy content.

The adverse effect of such emissions on the global environment, especially climate change, is generally accepted by most serious commentators. Thus there is a need to reduce the energy consumed in producing such paints.

One approach to this is to reduce the $TiO_2$ content of the paint. However, this simply reduces the opacity of the dried coating and, whilst each coat of dried paint may well have reduced energy content, additional coats will be required in order to achieve opacity. Consequently, any benefit is lost or at least, significantly diminished. Other approaches replace some or all of the $TiO_2$ with extender pigments such as chalk. Whilst such extenders require less energy than $TiO_2$ to extract and refine, the lower refractive index of such extenders is very close to the binders used in paint. As such, they do not scatter light as well as $TiO_2$ and in order to compensate for the $TiO_2$ more needs to be added to the paint to achieve the correct colour and opacity. However, this raises the PVC further, eventually to the extent that air is trapped in the dried paint film. Whilst this increases the opacity, it also usually results in poorer scrub resistance. If the PVC is increased still further by adding yet more extender, or indeed any other non-film forming inorganic material, macroscopic cracks appear as the film dries, resulting in unacceptable appearance.

One possible way out of this dilemma is to use calcined clay as this has good opacity and is less detrimental to the scrub resistance. However, this requires the clay to be heated to 1000°C thereby consuming large amounts of energy. Clearly, this does not result in significant energy savings and is thus not a preferred option.

United States Patent US 4,277,385 discloses paint compositions having PVC between 75 and 85% and further teaches that to avoid cracking in high PVC paint films, the formulation should be free of non-opacifying inorganic pigments (another name for extenders) essentially replacing them with non-film forming solid polymer particles. However, no attempt is made to minimise the $TiO_2$ content in these formulations and, thus the problem of high energy content and high $CO_2$ emissions are not addressed.

European Patent application EP 0113435 describes an aqueous paint having reduced $TiO_2$ content at PVC from 20 to 80%. It teaches to use mixtures comprising pigmented vesiculated polymer beads and larger opaque polymer particles having microvoids, but no pigments, to replace $TiO_2$ whilst maintaining burnish/scrub resistance. However, as pointed out in that application, pigmented vesiculated polymer beads themselves contain $TiO_2$ and thus add considerably to the $TiO_2$ content.

This does little, if anything, to reduce the total energy content of the paint. Pigmented vesiculated polymer beads are polymer particles containing both $TiO_2$ and microvoids.

Thus, there is a need for improved paint compositions having reduced $TiO_2$ content and thus low energy content whilst also having good opacity without mudcracking.

Accordingly, there is provided an aqueous pigmented coating composition comprising film-forming particulate polymer binder and non-film forming particulate material in amounts providing a pigment volume content of from 75 to 90% wherein the non-film forming material, calculated on the total volume solids, comprises

a) opacifying pigment particles comprising

i) from 2 to 8% rutile titanium dioxide and
ii) from 5 to 15% hollow sphere polymeric particles
and

b) non-opacifying extender particles comprising

i) from 10 to 40% calcium magnesium carbonate

ii) from 10 to 25% calcium carbonate

iii) from 5 to 20 % talc

and wherein the composition is free of pigmented vesiculated polymer beads.

Preferably the pigment volume content is from 77 to 85%, more preferably from 78 to 82, even more preferably from 79 to 81 and most preferably it is 80%

The binder preferably comprises an aqueous dispersion of polymer particles, often referred to as latex. More preferably, such dispersions are made using emulsion polymerisation.

For simplicity, the word 'polymer' in this specification is used to cover homopolymers and copolymers comprising two or more monomer variants.

Preferably, the polymer comprising the particulate binder is derived from styrene and/or its derivatives, and the esters of acrylic acid and/or methacrylic acid, referred to hereonin as acrylic monomers. Such polymers are often referred to as styrene/acrylics. Preferably, the relative amounts of styrene, and/or its derivatives, and acrylic is from 2:1 to 0.5:1, more preferably from1.5:1 to 0.8:1, even more preferably and 1.2:1 and 0.8:1 and most preferably it is 1:1 calculated on a weight basis.

Acrylic monomers include methyl (meth)acrylate, ethyl (meth)acrylate, propyl (meth)acrylate and butyl (meth) acrylate. Derivatives of styrene include $\alpha$-methyl styrene and vinyl toluene.

From 2 to 10% of acid functional monomers are advantageously copolymerised into the polymer comprising the particles. Suitable examples of such monomers include acrylic and methacrylic acid. More preferably the amount is from 4 to 8% and even more preferably it is from 5 to 7% by weight. The incorporation of the acid enables dispersions comprising smaller particles to be produced, for example, having a mean particle size of no more than 0.3 $\mu$m. Such particles sized polymers are preferred as they are better binders than larger sized particles.

The glass transition temperature, Tg, of the polymer binder can be controlled by the choice of monomers and the relative amounts copolymerised. Preferably, it is from -20 to 50°C, more preferably from -15 to 30°C, even more preferably from -10 to 20°C, yet more preferably from 0 to 15°C and most preferably from 0 to 10°C. When higher Tg polymers are used, more coalescing and/or plasticizing solvents are required to enable a coherent coating film to form at normal room temperature of approximately 20 to 25°C. Lower Tg polymers are preferred as these can film form effectively with reduced levels of solvents thereby keeping both the volatile organic content of the paint and the energy content of the paint to a minimum.

Preferably, the polymer binder in the present invention is derived from styrene, butyl acrylate and acrylic acid in a weight ratio of 47:47:6.

Preferably, the polymer binder contains no other polymer binder other than a styrene/acrylic.

Preferably the number average mean particle size of the polymer particles is from 0.05 to 0.30 $\mu$m, more preferably from 0.07 to 0.15 $\mu$m and most preferably from 0.08 to 0.14 $\mu$m. The number refers to the diameter of the particles. The smaller particle size is preferred as it results in improved scrub resistance, which is particularly important at the high PVC of the present invention.

Preferably the binder level of the coating is from 10 to 20% calculated on volume solids.

By aqueous is meant that at least 50% of the continuous phase is water, preferably from 75 to 100%, more preferably from 85 to 100%, even more preferably from 95 to 100% and most preferably it is 100%. Any balance is preferably water compatible organic solvent or mixture of solvents.

Preferably the $TiO_2$ is in the Rutile form as Anatase is a less efficient scatterer and thus more of it is required to achieve the same degree of whiteness.

Preferably the $TiO_2$ comprises from 3 to 8, more preferably from 4 to 8, even more preferably from 5 to 8, yet more preferably from 5 to 7 and most preferably from 6 to 7% of the composition.

Preferably, the non-film forming hollow sphere polymeric particles comprise from 5 to 20%, more preferably from 5 to 15%, even more preferably from 5 to 10%, still more preferably from 5 to 8% and most preferably from 5 to 7% calculated on the total volume solids of the coating composition.

Advantageously, the average particle size of the non-film forming hollow sphere polymeric particles is less than 1$\mu$m, more preferably from 0.01 to 1$\mu$m, even more preferably from 0.1 to 0.6$\mu$m, still more preferably from 0.2 to 0.5$\mu$m and most preferably from 0.35 to 0.4$\mu$m. For such particles a diameter of about 0.4$\mu$m is optimum for opacifying power. Suitable examples of such hollow sphere polymeric particles include Ropaque™ range of particles, especially Ropaque™ Ultra E as this provides the best balance of opacifying power and scrub resistance.

By non-opacifying extender particles is meant inorganic particles that have a refractive index close to that of the polymer binder. Since the opacifying strength of a particulate material is partly a consequence of the difference in refractive index of the material and the medium in which it is dispersed, such extenders are regarded essentially as non-opacifiers, see page 35 to 37, Paint and Surface Coatings - theory and practice edited by R.Lamboume and published by John Wiley and Sons

Preferably the calcium carbonate comprises from 10 to 20%, more preferably from 12 to 18% and most preferably from 14 to 18% of the total volume solids. The calcium carbonate is in the form of particles which are preferably cigar shaped-that is, they are rod shaped being thicker in the middle region and tapering at the ends. Preferably, the mean particle size is from 0.2-0.3$\mu$m. Suitable forms of calcium carbonate include calcite, preferably precipitated calcite. Socal P3 is an example of suitable precipitated calcium carbonate, in the form of calcite.

Preferably the talc comprises from 5 to 15, more preferably from 10 to 15% of the total volume solids otherwise the finish is poor producing a non-smooth surface and care must be taken during painting to minimise the poor appearance. Additionally, the finish becomes susceptible to defects such as craters, pinholes etc

Adding talc above 20% produces viscosity which is too high to allow easy application using conventional application techniques-such as rollers or brushes-and allow the paint to flow to produce an acceptably smooth finish.

The preferred viscosity characteristics of the coating, measured at 25°C, are defined by the high shear viscosity at 10000s$^{-1}$, and the medium shear viscosity, measured at 250 s$^{-1}$. Preferably the high shear viscosity is less than 0.3 Pa.s, more preferably from 0.02 to 0.3 Pa.s, yet more preferably from 0.1 to 0.3 Pa.s. This allows for easy application without excessive 'drag' on the brush or roller. The medium shear viscosity is advantageously from 0.3 to 1.5 Pa.s. Below 0.3 Pa.s the liquid coating will tend to sag whilst a medium shear viscosity greater than 1.5 Pa.s will not flow adequately leaving a rather rough and uneven appearance to the coating when dry. More preferably, the medium shear viscosity is from 0.5 to 1.5 Pa.s, yet more preferably it is from 0.75 to 1.25 Pa.s and most preferably it is from 0.55 to 1.2 Pa.s.

The mineral known as dolomite is composed substantially of calcium magnesium carbonate, $CaMg(CO_3)_2$. This is a convenient and cost effective source of calcium magnesium carbonate and is preferred for use in the present invention. It is available in powder form of differing mean particle sizes.

Preferably, the dolomite powder used in the present invention is a mixture of differing mean particle sizes, more preferably of two different sizes. This ensures that the $TiO_2$ particles are sufficiently spaced apart that scattering, and therefore opacity, is efficient. Even more preferably the mean particle size of the coarser dolomite is from 15 to 35$\mu$m and of the finer one, from 2 to 10$\mu$m. Yet more preferably, the dolomite is in powder form consisting of a mixture of a first powder, having a mean particle size of from 22 to 28$\mu$m, and a second powder, having a mean particle size of from 3 to 6$\mu$m. The relative amounts of the two powders are preferably in the ratio of 25:75 to 75:25 by weight.

Preferably, the dried coating composition comprises from 15 to 35, more preferably from 20 to 35 and most preferably from 20 to 30% of $CaMg(CO_3)_2$ calculated on the total volume solids.

The mean particle sizes quoted for the extenders are measured as d50% by weight, meaning that 50% of the particles by weight have a diameter greater than the quoted number and 50% have a diameter smaller than the number.

Preferably the coating composition is free of non-film forming solid polymer particles because they increase the energy content of the coating without providing any benefits. Preferably the composition is free of calcined clay, especially flash calcined clay, which although is a good scatterer producing good opacity, nevertheless consumes large amounts of energy to produce.

The benefits of the invention are advantageously achieved in coloured coating compositions requiring high levels of $TiO_2$. Such colours are the greys and lightly coloured coatings, often referred to as pastel or light colours, and of course, the whites.

These, and all colours, can be defined using the well known Y, C*, h* system. In the system, any colour can be represented by

     i. its hue, depicted by h*
     ii. its chroma, C*,
     iii. its light reflectance value, Y

These terms are defined scientifically by the Commission Internationale de l'Eclairage (CIE) [see 'International Lighting Vocabulary', 4th Edition, published IEC/CIE 017.4-1987. ISBN 978 3 900734 07 7].

For the avoidance of any doubt, any reference to coating colour in this specification is to the colour of the coating when dry, unless otherwise stated.

Hue is a measure of how close the colour is to red, yellow, green and blue. It is depicted by hue angle ranging from 0 to 360° where the angle defines the position of the hue in colour space, where red, yellow, green and blue are at angles of 0, 90, 180 and 270° respectively. Angles between these 'cardinal points' indicate intermediate colours eg a hue angle of 45° is a reddish yellow (orange) colour.

Chroma is a measure of colour intensity, ie the extent to which it is either a pastel/ light colour or a strong colour or something in between. Chroma can take values from 0 to 100 with the higher numbers indicating stronger colours. Colours having a chroma value of 0 are 'neutral' greys lying on an axis from black to white.

The light reflectance value is a measure of the perceived lightness of the colour, ranging from 0 to 100, with 0 representing black and 100 white.

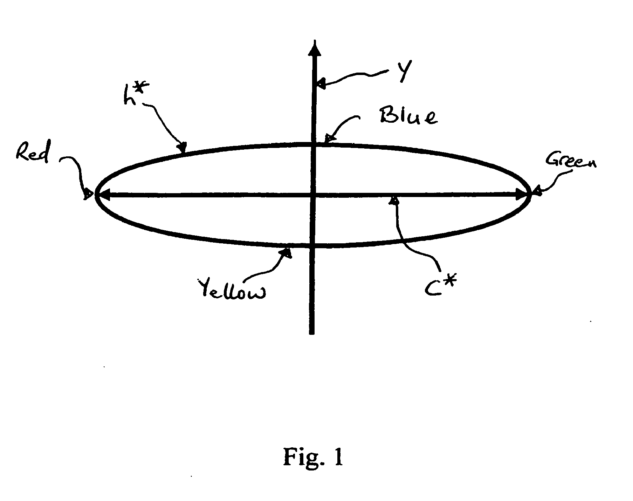

Figure 1 shows a simplified representation of the Y, C*, h* system. It shows a slice of colours space at about the mid point of the light reflectance value, Y, range. The Y axis runs from 0 to 100. Red, yellow, green and blue are shown in their appropriate positions on the hue, circle. The C* axis runs from zero at the origin to 100 at the perimeter. At each value of Y, further slices of hue are associated representing lighter and darker colours. At both the dark and the light end of the Y scale, the colours are less intense, and thus chroma is inevitably low. For this reason, colour space is often depicted as a sphere, although in truth it is more an irregular cylinder in shape.

Using the CIE notation, the grey or light coloured compositions which benefit most from the present invention, can be identified as those colours, including whites, satisfying the following criteria;

$$C^* < C_{critical} \qquad \text{equation 1}$$

$$Y > mC^* + 35 \qquad \text{equation 2}$$

where m and $C_{critical}$ take the values in Table 1 below.

Table 1

| Hue angle h* | m | $C_{critical}$ |
|---|---|---|
| 0 | 0.098 | 39.063 |
| 10 | 0.063 | 42.739 |
| 20 | 0.231 | 40.130 |
| 30 | 0.399 | 37.522 |
| 40 | 0.498 | 37.444 |
| 50 | 0.579 | 38.000 |
| 60 | 0.655 | 39.500 |
| 70 | 0.732 | 41.000 |
| 80 | 0.793 | 45.286 |
| 90 | 0.854 | 49.571 |
| 100 | 0.803 | 47.136 |
| 110 | 0.740 | 43.955 |
| 120 | 0.663 | 41.727 |
| 130 | 0.580 | 39.909 |
| 140 | 0.498 | 38.565 |
| 150 | 0.416 | 37.696 |
| 160 | 0.346 | 37.381 |
| 170 | 0.318 | 39.586 |
| 180 | 0.283 | 40.850 |
| 190 | 0.190 | 39.350 |
| 200 | 0.101 | 38.000 |
| 210 | 0.060 | 38.000 |
| 220 | 0.021 | 38.333 |
| 230 | -0.007 | 40.000 |
| 240 | -0.041 | 40.314 |
| 250 | -0.083 | 38.600 |

(continued)

| Hue angle h* | m | C$_{critical}$ |
|---|---|---|
| 260 | -0.125 | 36.886 |
| 270 | -0.167 | 35.171 |
| 280 | -0.152 | 34.640 |
| 290 | -0.131 | 34.240 |
| 300 | -0.079 | 34.000 |
| 310 | 0.016 | 34.000 |
| 320 | 0.112 | 34.000 |
| 330 | 0.207 | 34.000 |
| 340 | 0.235 | 34.471 |
| 350 | 0.161 | 35.647 |
| 360 | 0.098 | 39.063 |

Above the C$_{critical}$ value the colour intensity is too high to be perceived as a pastel colour.

The values of m and C$_{critical}$ at intermediate hue angles can be calculated by linear interpolation.

The table enables the calculation of C* and Y for any given hue and thus the whites, grey or pastel/light shades are explicitly identified.

Coatings having chroma, C* less than about 5 and a Y value more than 95 are perceived by the human eye as white.

The values of C*, Y and h* of any colour may be calculated from the spectral reflectance curve of the colour, measured using a spectrophotometer in accordance with the manufacturers instructions. A suitable spectrophotometer is the Datacolor Spectraflash SF 600.

Preferably, the dried coating compositions of the invention satisfy equations 1 and 2. More preferably, the dried coating compositions have a chroma less than 5 and a Y value greater than 85.

Preferably, the gloss value of the dried coating is less than 15% when measured at 85°, more preferably from 5 to 12 and most preferably from 8 to 12%.

The coating composition may also contain other ingredients that are standard for coatings such as waxes, rheological modifiers, dispersants, anti-foams, tackifiers, plasticisers, crosslinking agents, flow aids, biocides and clays.

In another aspect of the invention there is provided a method of coating an article or structure having a surface with a composition according to the present invention including the steps of applying at least one liquid layer of the coating by brush, roller, pad or spray and allowing or causing the layer to dry and/or harden.

In a further aspect of the invention there is provided an article or structure having a surface coated with a composition according to the present invention.

Ingredients

The following ingredients were used in preparing the examples.

Tioxide™ TR92 is a Rutile form of TiO$_2$ (density of 4.05g/cm$^3$) available from Huntsman Tioxide Europe Ltd, Hartlepool, Cleveland, United Kingdom. Microdol™ H200 and H600 are both dolomites (density of 2.85g/cm$^3$) and are available from Omya. Omya House, Derby, United Kingdom Socal™ P3 is precipitated calcium carbonate (density of 2.70g/cm$^3$) and is available from Solvay, Rheinberg, Germany.

China Clay Supreme (density 2.60g/cm$^3$) is available from Imerys.

Ropaque™ Ultra E is a 30% non-vol dispersion of hollow polymeric spherical particles (density of 0.591g/cm$^3$) and is available from Rohm and Haas, Philadelphia, USA.

Steabright™ is a talc (density of 2.78g/cm$^3$) available from Rio Tinto PLC, London, United Kingdom

Axilat™ DS910 is a styrene-acrylic latex available (50wt% non-vol; density of non-vol is 1.08g/cm$^3$) from Hexion Specialty Chemicals BVBA, Kallo, Belgium. Mowlith LDM 1871 is a non-plasticised ethylene vinyl acetate (53wt% non-vol; density of non-vol is 1.08g/cm$^3$) available from Celenese.

Synthomer DP 5316 is a styrene/acrylic polymer (50wt% non-vol; density of non-vol is 1.08g/cm$^3$) (available from Synthomer Ltd, Harlow, Essex, UK CM20 2BH. Texanol™ is an ester alcohol coalescent available from Eastman Chemical Company, Tennessee, USA.

Orotan™ 731 A is a pigment dispersing agent (25wt% non-vol; density of non-vol is 1 g/cm$^3$) available from Rohm & Haas Philadelphia, USA.

Disponil™ A1580 is a surfactant (80wt% non-vol; density of non-vol is 1.00 g/cm$^3$) and is available from Cognis Deutschland GmbH & Co. KG. PO Box 130164, Germany.

Dispelair™ CF 823 is a defoamer (60wt% non-vol; density of non-vol is 1.00g/cm$^{-3}$) and is available from Blackburn Chemicals Ltd, Whitebirk Industrial Estate, Blackburn, United Kingdom.

Blanose™ 7M 31C SCS 9554 (density 1.59g/cm$^3$) is available from Hercules GmbH, Dusseldorf, Germany.

Rocima™ V 189 is available from Philadelphia, USA.

Aquaflow™ NHS 300 (23wt% non-vol; density of non-vol is 1.00g/cm$^3$) is available from Hercules GmbH, Dusseldorf, Germany.

**China Clay Supreme (density is 2.60g/cm$^3$) is available from Imerys.**

**Test Procedures**

The following tests were used to evaluate the examples

Opacity

Opacity was measured in accordance with BS 3900-D4.

At least 90% is considered acceptable.

The measured opacity is not linear in its relationship to how the eye perceives opacity. Thus, small differences in measured opacity are seen by the eye as much larger differences. Thus the number of coats required to achieve visual opacity is also quoted.

Gloss

Gloss was measured in accordance with BS EN ISO 2813, BS 3900-D5.

Scrub Resistance

Scrub resistance was measured in accordance with BS EN ISO 11998

Less than 6mg/cm$^2$ removal is acceptable.

Mudcracking

The paint of the example is drawn down at various wet coating thicknesses, over plasterboard previously coated with a matt paint, such as Dulux Trade Supermatt. The paint of the example on drying is inspected for cracking and a note is made of the maximum wet film thickness below which cracking is not observed.

A film thickness of at least 800μm is considered acceptable.

High Shear Viscosity

The high shear viscosity is measured at 25°C using an ICI Cone and Plate viscometer (available from Research Equipment London Ltd, London, TW2 5NX) operating at 10,000s$^{-1}$.

Rotothinner viscosity

The medium shear viscosity is measured at 25°C using a Rotothinner viscometer (available from Sheen Instruments Ltd, Kingston-upon-Thames, Surrey, UK) fitted with a standard disc rotor operating at about 250 s$^{-1}$.

**Examples**

The invention will now be illustrated by the following examples.

Example 1

The paint made using the ingredients and amounts listed in Table 1 was made according to the following 51 laboratory scale method. Up to 5kg of millbase can be made in the dispersion vessel.

Millbase stage

Using a 5 litre metal dispersion vessel, load the Water (1), Texanol, Orotan, Disponil, Dispelair and Rocima V189. Place vessel under High Speed Disperser fitted with a saw tooth blade. Stir at slow speed so that no splashing is observed. Add Microdol H200 and H600, Socal P3, China Clay Supreme, Steabright and Tioxide TR92, run for 2 minutes at slow speed then add Blanose thickener. Over 5minutes slowly increase the speed as the paint thickens. Unit should be running at approximately 2500 r.p.m. (depending on volume), but without splashing. Stir for a further 30minutes. Stop unit half way through to ensure no pigment has stuck to sides/base of vessel by hand stirring. Turn unit back on to high speed, after 30 minutes reduce to slow speed. Check the state of dispersion of the millbase for bits by brushing out on a card. If acceptable amount of bits, add Water (2) and run for a further 2minutes and then switch off the stirrer.

Paint stage

Load binder into a suitably sized vessel and place under a stirrer fitted with a paddle blade.
Load Ammonia, Dispelair, the Millbase prepared above, Ropaque, Water (3) and Aquaflow. Adjust the stirrer speed as the volume in the vessel increases, being careful to avoid splashing.
Stir for a further run 15 minutes at low speed (approx 500 r.p.m)

|  | Liquid paint | Dry paint | |
| --- | --- | --- | --- |
|  | wt% | vol | vol % |
| 1. Water (1) | 31.500 | 0.000 | 0.000 |
| 2.Texanol NX 795 | 0.500 | 0.000 | 0.000 |
| 3.Orotan 731 A | 1.000 | 0.250 | 1.047 |
| 4.Disponil A1580 | 0.500 | 0.400 | 1.676 |
| 5.Dispelair CF823 | 0.130 | 0.078 | 0.327 |
| 6.Microdol H600 | 8.500 | 2.982 | 12.494 |
| 7.Socal P3 | 12.500 | 4.630 | 19.394 |
| 8.China Clay Supreme | 5.500 | 2.115 | 8.862 |
| 9.Steabright | 8.500 | 3.058 | 12.808 |
| 10.Microdol H 200 | 8.500 | 2.982 | 12.494 |
| 11.Tioxide TR92 | 6.500 | 1.605 | 6.723 |
| 12.Blanose 7M 31C SCS 9554 | 0.500 | 0.314 | 1.317 |
| 13.Rocima V 189 | 0.240 | 0.000 | 0.000 |
| 14. Water (2) | 2.000 | 0.000 | 0.000 |
| 15.Axilat DS 910 | 6.500 | 3.009 | 12.606 |
| 16.Ammonia 910 | 0.007 | 0.000 | 0.000 |
| 17.Dispelair CF823 | 0.120 | 0.072 | 0.302 |
| 18.Ropaque Ultra E | 4.000 | 2.030 | 8.506 |
| 19. Water (3) | 1.503 | 0.000 | 0.000 |
| 20.Aquaflow NHS 300 | 1.500 | 0.345 | 1.445 |

| | |
| --- | --- |
| PVC (total) | 81.37% |
| PVC (TiO$_2$) | 6.7% |

The paint was applied to a substrate as described in the test procedures above and evaluated for the following properties.

| | |
| --- | --- |
| Opacity | 93.6% |
| Visual opacity required | 2 coats |
| Scrub resistance | 2.12mg at 200 cycles |
| Mudcrack | 900$\mu$m |

Example 2

Example 2 was made according to the method used in Example 1 but using a different binder, Synthomer DP5316.

|  | Liquid paint | | Dry paint |
|---|---|---|---|
|  | wt% | vol | vol % |
| 1. Water (1) | 30.000 | 0.000 | 0.000 |
| 2.Texanol NX 795 | 2.000 | 0.000 | 0.000 |
| 3.Orotan 731 A | 1.000 | 0.250 | 1.047 |
| 4.Disponil A 1580 | 0.500 | 0.400 | 1.676 |
| 5.Dispelair CF823 | 0.130 | 0.078 | 0.327 |
| 6.Microdol H600 | 8.500 | 2.982 | 12.494 |
| 7.Socal P3 | 12.500 | 4.630 | 19.394 |
| 8.China Clay Supreme | 5.500 | 2.115 | 8.862 |
| 9.Steabright | 8.500 | 3.058 | 12.808 |
| 10.Microdol H 200 | 8.500 | 2.982 | 12.494 |
| 11.Tioxide TR92 | 6.500 | 1.605 | 6.723 |
| 12.Blanose 7M 31C SCS 9554 | 0.500 | 0.314 | 1.317 |
| 13.Rocima V 189 | 0.240 | 0.000 | 0.000 |
| 14.Water (2) | 2.000 | 0.000 | 0.000 |
| 15.Synthomer DP 5316 | 6.500 | 3.009 | 12.606 |
| 16.Ammonia 910 | 0.007 | 0.000 | 0.000 |
| 17.Dispelair CF823 | 0.120 | 0.072 | 0.302 |
| 18.Ropaque Ultra E | 4.000 | 2.030 | 8.506 |
| 19. Water (3) | 1.503 | 0.000 | 0.000 |
| 20.Aquaflow NHS 300 | 1.500 | 0.345 | 1.445 |
| PVC (total) | 81.3% | | |
| PVC (TiO$_2$) | 6.7% | | |
| Opacity | | 93.7% | |
| Visual opacity required | 2 coats | | |
| Scrub resistance | | 2.45 mg at 200 cycles | |
| Mudcrack | | 850$\mu$m | |

Example 3

Example 3 was made according to the method used in Example 1 but using an ethylene vinyl acetate copolymer binder, Mowlith LDM1871..

|  | Liquid paint | Dry | paint |
|---|---|---|---|
|  | wt% | vol | vol % |
| 1. Water (1) | 15.800 | 0.000 | 0.000 |
| 2.Optigel CK | 0.150 | 0.056 | 0.234 |
| 3.Dispex N40 | 0.200 | 0.080 | 0.337 |
| 4.Disponil A1580 | 0.500 | 0.400 | 1.684 |
| 5.Dispelair CF823 | 0.130 | 0.078 | 0.328 |
| 6.Microdol H600 | 8.500 | 2.982 | 12.553 |
| 7.Socal P3 | 12.500 | 4.630 | 19.485 |
| 8.China Clay Supreme | 5.500 | 2.115 | 8.903 |
| 9.Steabright | 8.500 | 3.058 | 12.869 |
| 10.Microdol H 200 | 8.500 | 2.982 | 12.553 |
| 11.Tioxide RTC90 | 5.500 | 1.358 | 5.716 |
| 12.Natrosol 250MR | 0.550 | 0.346 | 1.456 |

(continued)

| | Liquid paint wt% | Dry vol | paint vol % |
|---|---|---|---|
| 13.Rocima V 189 | 0.240 | 0.000 | 0.000 |
| 14. Water (2) | 18.100 | 0.000 | 0.000 |
| 15.Mowlith LDM1871 | 7.076 | 3.472 | 14.614 |
| 16.Ammonia 910 | 0.021 | 0.000 | 0.000 |
| 17.Dispelair CF823 | 0.120 | 0.072 | 0.303 |
| 18.Ropaque Ultra E | 4.000 | 2.030 | 8.546 |
| 19. Water (3) | 3.613 | 0.000 | 0.000 |
| 20.Acrysol RM 2020 | 1.500 | 0.100 | 0.421 |

PVC (total) 80.6%

PVC ($TiO_2$) 5.7%

Comparative Examples

All the Comparative Examples were made using the same method as described in Example 1, differing only in the ingredients and/or levels used as indicated in the tables.

Comparative Example A

A vinyl acrylic binder was used in this example. The a monomer composition was vinyl acetate-butyl acrylate copolymer, 85:15 by weight, average particle size ca 0.3 $\mu$m) was used

| | Liquid paint wt% | Dry paint vol | vol % |
|---|---|---|---|
| 1.Water(1) | 30.000 | 0.000 | 0.000 |
| 2.Texanol NX 795 | 2.000 | 0.000 | 0.000 |
| 3.Orotan 731 A | 1.000 | 0.250 | 1.047 |
| 4.Disponil A1580 | 0.500 | 0.400 | 1.676 |
| 5.Dispelair CF823 | 0.130 | 0.078 | 0.327 |
| 6.Microdol H600 | 8.500 | 2.982 | 12.494 |
| 7.Socal P3 | 12.500 | 4.630 | 19.394 |
| 8.China Clay Supreme | 5.500 | 2.115 | 8.862 |
| 9.Steabright | 8.500 | 3.058 | 12.808 |
| 10.Microdol H 200 | 8.500 | 2.982 | 12.494 |
| 11.Tioxide TR92 | 6.500 | 1.605 | 6.723 |
| 12.Blanose 7M 31C SCS 9554 | 0.500 | 0.314 | 1.317 |
| 13.Rocima V 189 | 0.240 | 0.000 | 0.000 |
| 14.Water (2) | 2.000 | 0.000 | 0.000 |
| 15.Vinyl acrylic binder | 6.500 | 3.009 | 12.606 |
| 16.Ammonia 910 | 0.007 | 0.000 | 0.000 |
| 17.Dispelair CF823 | 0.120 | 0.072 | 0.302 |
| 18.Ropaque Ultra E | 4.000 | 2.030 | 8.506 |
| 19. Water (3) | 1.503 | 0.000 | 0.000 |
| 20.Aquaflow NHS 300 | 1.500 | 0.345 | 1.445 |

PVC (total)     81.3%

PVC ($TiO_2$)     6.7%

(continued)

|  | Liquid paint | Dry paint | |
|---|---|---|---|
|  | wt% | vol | vol % |
| Opacity | 92.9% | | |
| Visual opacity required | 2 coats | | |
| Scrub resistance | 8.7 mg at | 200 cycles | |
| Mudcrack | 700μm | | |

Comparative Example B

Ropaque was omitted in this example.

|  | Liquid paint | Dry paint | |
|---|---|---|---|
|  | wt% | vol | vol % |
| 1,Water (1) | 30.000 | 0.000 | 0.000 |
| 2.Texanol NX 795 | 2.000 | 0.000 | 0.000 |
| 3.Orotan 731 A | 1.000 | 0.250 | 1.145 |
| 4.Disponil A 1580 | 0.500 | 0.400 | 1.831 |
| 5.Dispelair CF823 | 0.130 | 0.078 | 0.357 |
| 6.Microdol H600 | 8.500 | 2.982 | 13.655. |
| 7.Socal P3 | 12.500 | 4.630 | 21.197 |
| 8.China Clay Supreme | 5.500 | 2.115 | 9.685 |
| 9.Steabright | 8.500 | 3.058 | 13.999 |
| 10.Microdol H 200 | 8.500 | 2.982 | 13.655 |
| 11.Tioxide TR92 | 6.500 | 1.605 | 7.348 |
| 12.Blanose 7M 31C SCS 9554 | 0.500 | 0.314 | 1.440 |
| 13.Rocima V 189 | 0.240 | 0.000 | 0.000 |
| 14.Water (2) | 6.000 | 0.000 | 0.000 |
| 15.Axilat DS910 | 6.500 | 3.009 | 13.778 |
| 16.Ammonia 910 | 0.007 | 0.000 | 0.000 |
| 17.Dispelair CF823 | 0.120 | 0.072 | 0.330 |
| 18.Ropaque Ultra E | 0.000 | 0.000 | 0.000 |
| 19.Water (3) | 1.503 | 0.000 | 0.000 |
| 20.Aquaflow NHS 300 | 1.500 | 0.300 | 1.158 |

PVC (total) 79.5%
PVC (TiO$_2$) 7.3%

| Opacity | 89.0% |
|---|---|
| Visual opacity required | 3 coats |
| Scrub resistance | 2.4 mg at 200 cycles |
| Mudcrack | 900μm |

Comparative Example C

Comparative Example C contains the same ingredients as Example 1 except that Microdol H600 is omitted and the level of Microdol H200 is reduced.

|  | Liquid paint | Dry paint | |
|---|---|---|---|
|  | wt% | vol | vol % |
| 1. Water (1) | 30.000 | 0.000 | 0.000 |
| 2.Texanol NX 795 | 2.000 | 0.000 | 0.000 |

(continued)

|  | Liquid paint wt% | vol | Dry paint vol % |
|---|---|---|---|
| 3.Orotan 731 A | 1.000 | 0.250 | 1.039 |
| 4.Disponil A1580 | 0.500 | 0.400 | 1.662 |
| 5.Dispelair CF823 | 0.130 | 0.078 | 0.324 |
| 6. Microdol H600 | 0.000 | 0.000 | 0.000 |
| 7.Socal P3 | 21.000 | 7.778 | 32.316 |
| 8.China Clay Supreme | 5.500 | 2.115 | 8.789 |
| 9.Steabright | 12.000 | 4.317 | 17.935 |
| 10.Microdol H 200 | 5.000 | 1.754 | 7.289 |
| 11.Tioxide TR92 | 6.500 | 1.605 | 6.668 |
| 12.Blanose 7M 31C SCS 9554 | 0.500 | 0.314 | 1.307 |
| 13.Rocima V 189 | 0.240 | 0.000 | 0.000 |
| 14. Water (2) | 2.000 | 0.000 | 0.000 |
| 15.Axilat DS 910 | 6.500 | 3.009 | 12.503 |
| 16.Ammonia 910 | 0.007 | 0.000 | 0.000 |
| 17.Dispelair CF823 | 0.120 | 0.072 | 0.299 |
| 18.Ropaque Ultra E | 4.000 | 2.030 | 8.436 |
| 19. Water (3) | 1.503 | 0.000 | 0.000 |
| 20.Aquaflow NHS 300 | 1.500 | 0.345 | 1.433 |

| | |
|---|---|
| PVC (total) | 81.4% |
| PVC (TiO2) | 6.7% |
| | |
| Opacity | 91.6% |
| Visual opacity required | 2 coats |
| Scrub resistance | 6.71 mg at 200 cycles |
| Mudcrack | 300 $\mu$m |

## Comparative Example D

Comparative Example D contains the same ingredients as Example 1 except that the calcium carbonate (Socal P3) is replaced by increased levels of Dolomite H200 and Dolomite H600.

|  | Liquid paint wt% | Dry paint vol | vol % |
|---|---|---|---|
| 1. Water (1) | 30.000 | 0.000 | 0.000 |
| 2.Texanol NX 795 | 2.000 | 0.000 | 0.000 |
| 3.Orotan 731 A | 1.000 | 0.250 | 1.058 |
| 4.Disponil A1580 | 0.500 | 0.400 | 1.693 |
| 5.Dispelair CF823 | 0.130 | 0.078 | 0.330 |
| 6.Microdol H600 | 14.000 | 4.912 | 20.790 |
| 7.Socal P3 | 0.000 | 0.000 | 0.000 |
| 8.China Clay Supreme | 5.500 | 2.115 | 8.953 |
| 9. Steabright | 8.500 | 3.058 | 12.940 |
| 10.Microdol H 200 | 15.500 | 5.439 | 23.018 |
| 11.Tioxide TR92 | 6.500 | 1.605 | 6.793 |
| 12.Blanose 7M 31C SCS 9554 | 0.500 | 0.314 | 1.331 |
| 13.Rocima V189 | 0.240 | 0.000 | 0.000 |
| 14. Water (2) | 2.000 | 0.000 | 0.000 |
| 15.Axilat DS 910 | 6.500 | 3.009 | 12.736 |

(continued)

| | Liquid paint | Dry paint | |
|---|---|---|---|
| | wt% | vol | vol % |
| 16.Ammonia 910 | 0.007 | 0.000 | 0.000 |
| 17.Dispelair CF823 | 0.120 | 0.072 | 0.305 |
| 18.Ropaque Ultra E | 4.000 | 2.030 | 8.593 |
| 19.Water (3) | 1.503 | 0.000 | 0.000 |
| 20.Aquaflow NHS 300 | 1.500 | 0.345 | 1.460 |
| PVC (total) | 81.1% | | |
| PVC (TiO2) | 6.8% | | |

The paint was applied to a substrate as described in the test procedures above and evaluated for the following properties.

| Opacity | 89.0 % |
|---|---|
| Visual opacity required | 3 coats |
| Scrub resistance | 2.42 mg at 200 cycles |
| Mudcrack | 1050 μm |

Comparative example E

Comparative Example E contains the same ingredients as Example 1 except that the talc is omitted and replaced with Dolomite H200 and Dolomite H600 and reduced calcium carbonate.

| | Liquid paint | Dry paint | |
|---|---|---|---|
| | wt% | vol | vol % |
| 1. Water (1) | 30.000 | 0.000 | 0.000 |
| 2.Texanol NX 795 | 2.000 | 0.000 | 0.000 |
| 3.Orotan 731 A | 1.000 | 0.250 | 1.054 |
| 4.Disponil A1580 | 0.500 | 0.400 | 1.686 |
| 5.Dispelair CF823 | 0.130 | 0.078 | 0.329 |
| 6.Microdol H600 | 14.000 | 4.912 | 20.711 |
| 7.Socal P3 | 8.500 | 3.148 | 13.273 |
| 8.China Clay Supreme | 5.500 | 2.115 | 8.919 |
| 9.Steabright | 0.000 | 0.000 | 0.000 |
| 10.Microdol H 200 | 15.500 | 5.439 | 22.930 |
| 11.Tioxide TR92 | 6.500 | 1.605 | 6.767 |
| 12.Blanose 7M 31C SCS 9554 | 0.500 | 0.314 | 1.326 |
| 13.Rocima V189 | 0.240 | 0.000 | 0.000 |
| 14. Water (2) | 2.000 | 0.000 | 0.000 |
| 15.Axilat DS 910 | 6.500 | 3.009 | 12.687 |
| 16.Ammonia 910 | 0.007 | 0.000 | 0.000 |
| 17.Dispelair CF823 | 0.120 | 0.072 | 0.304 |
| 18.Ropaque Ultra E | 4.000 | 2.030 | 8.561 |
| 19. Water (3) | 1.503 | 0.000 | 0.000 |
| 20.Aquaflow NHS 300 | 1.500 | 0.345 | 1.455 |
| PVC (total) | 81.2% | | |
| PVC (TiO2) | 6.8% | | |

The paint was applied to a substrate as described in the test procedures above and evaluated for the following properties.

| | |
|---|---|
| Opacity | 92.6% |
| Visual opacity required | 2 coats |
| Scrub resistance | 7.89 mg at 200 cycles |
| Mudcrack | 700 $\mu$m |

**Claims**

1. An aqueous pigmented coating composition comprising
film-forming particulate polymeric binder, comprising a styrene-acrylic polymer, and non-film forming particulate material in amounts providing a pigment volume content of from 75 to 90%
wherein the non-film forming material calculated on the total volume solids comprises

   a) opacifying pigment particles comprising

   i) from 2 to 8% $TiO_2$
   ii) from 5 to 15% hollow polymeric spherical particles
   and

   b) non-opacifying extender particles comprising

   i) from 10 to 40% calcium magnesium carbonate
   ii) from 10 to 25% calcium carbonate
   iii) from 5 to 20 % talc

   and wherein the composition is free of pigmented vesiculated polymer beads.

2. A coating composition according to claim 1 which is free of non-film forming solid polymer particles.

3. A coating composition according to claim 1 or claim 2 which is free of calcined clay.

4. A coating composition according to claim 3 wherein the ratio of styrene to acrylic monomers in the polymer is from 2:1 to 0.5:1 calculated on % weight basis.

5. A coating composition according to any one of the previous claims wherein the opacifying particles consist of from 2 to 8% $TiO_2$ and from 5 to 15% hollow polymeric spherical particles.

6. A coating composition according to any one of the previous claims wherein the calcium magnesium carbonate comprises a mixture of a first powder and a second powder, the first having mean particles size of 2 to 10$\mu$m and the second having a mean particle size of from 15 to 35 $\mu$m.

7. A coating composition according to claim 6 wherein the ratio of the two powders is from 25:75 to 75:25 by weight.

8. A coating composition according to any one of the previous claims wherein the sheen level is less than 15% measured at 85° using a glossmeter.

9. A coating composition according to any one of the previous claims and having a colour when dry satisfying the criteria of

$$C^* < C_{critical} \text{ and}$$

$$Y > mC^* + 35$$

when calculated using m and $C_{critical}$ according to the table below

| Hue angle h* | M | $C_{critical}$ |
|---|---|---|
| 0 | 0.098 | 39.063 |
| 10 | 0.063 | 42.739 |
| 20 | 0.231 | 40.130 |
| 30 | 0.399 | 37.522 |
| 40 | 0.498 | 37.444 |
| 50 | 0.579 | 38.000 |
| 60 | 0.655 | 39.500 |
| 70 | 0.732 | 41.000 |
| 80 | 0.793 | 45.286 |
| 90 | 0.854 | 49.571 |
| 100 | 0.803 | 47.136 |
| 110 | 0.740 | 43.955 |
| 120 | 0.663 | 41.727 |
| 130 | 0.580 | 39.909 |
| 140 | 0.498 | 38.565 |
| 150 | 0.416 | 37.696 |
| 160 | 0.346 | 37.381 |
| 170 | 0.318 | 39.586 |
| 180 | 0.283 | 40.850 |
| 190 | 0.190 | 39.350 |
| 200 | 0.101 | 38.000 |
| 210 | 0.060 | 38.000 |
| 220 | 0.021 | 38.333 |
| 230 | -0.007 | 40.000 |
| 240 | -0.041 | 40.314 |
| 250 | -0.083 | 38.600 |
| 260 | -0.125 | 36.886 |
| 270 | -0.167 | 35.171 |
| 280 | -0.152 | 34.640 |
| 290 | -0.131 | 34.240 |
| 300 | -0.079 | 34.000 |
| 310 | 0.016 | 34.000 |
| 320 | 0.112 | 34.000 |
| 330 | 0.207 | 34.000 |
| 340 | 0.235 | 34.471 |
| 350 | 0.161 | 35.647 |
| 360 | 0.098 | 39.063 |

**10.** A coating composition according to claim 9 having a C* value of less than 5 and a Y value greater that 85.

**11.** A coating composition according to any one of the previous claims and further comprising ingredients selected from the group consisting of antifoams, defoamers, biocides, coalescing solvents, plasticizers, flow aids, rheological modifiers, dispersants and clays.

**12.** A method of coating an article or structure having a surface with a composition as defined in any one of the preceding claims including the steps of applying at least one
liquid layer of the coating by brush, roller, pad or spray; allowing or causing the layer to dry and/or harden.

**13.** An article or structure having a surface coated with a composition as defined in any one of claims 1 to 11.

**Patentansprüche**

**1.** Wässrige pigmentierte Beschichtungszusammensetzung, umfassend:

ein filmbildendes teilchenförmiges polymeres Bindemittel, das ein Styrol-Acryl-Polymer umfasst, sowie ein nichtfilmbildendes teilchenförmiges Material in Mengen, die einen Pigmentvolumengehalt von 75 bis 90% ergeben; wobei das nichtfilmbildende Material, bezogen auf das Gesamtvolumen der Feststoffe, Folgendes umfasst:

a) deckende Pigmentteilchen, umfassend

i) 2 bis 8% $TiO_2$;
ii) 5 bis 15% hohle polymere sphärische Teilchen; und

b) nichtdeckende Streckmittelteilchen, umfassend

i) 10 bis 40% Calciummagnesiumcarbonat;
ii) 10 bis 25% Calciumcarbonat;
iii) 5 bis 20% Talk;

und wobei die Zusammensetzung frei von pigmentierten vesikulierten Polymerkügelchen ist.

**2.** Beschichtungszusammensetzung gemäß Anspruch 1, die frei von nichtfilmbildenden festen Polymerteilchen ist.

**3.** Beschichtungszusammensetzung gemäß Anspruch 1 oder 2, die frei von calciniertem Ton ist.

**4.** Beschichtungszusammensetzung gemäß Anspruch 3, wobei das Verhältnis von Styrol- zu Acryl-Monomeren in dem Polymer 2:1 bis 0,5:1 beträgt, berechnet auf Gewichtsprozentbasis.

**5.** Beschichtungszusammensetzung gemäß einem der vorstehenden Ansprüche, wobei die deckenden Teilchen aus 2 bis 8% $TiO_2$ und 5 bis 15% hohlen polymeren sphärischen Teilchen bestehen.

**6.** Beschichtungszusammensetzung gemäß einem der vorstehenden Ansprüche, wobei das Calciummagnesiumcarbonat ein Gemisch aus einem ersten Pulver und einem zweiten Pulver umfasst, wobei das erste eine mittlere Teilchengröße von 2 bis 10 μm hat und das zweite eine mittlere Teilchengröße von 15 bis 35 μm hat.

**7.** Beschichtungszusammensetzung gemäß Anspruch 6, wobei das Verhältnis der beiden Pulver 25:75 bis 75:25 Gewichtsteile beträgt.

**8.** Beschichtungszusammensetzung gemäß einem der vorstehenden Ansprüche, wobei der bei 85° mit Hilfe eines Glanzmessgeräts gemessene Glanzgrad kleiner als 15% ist.

**9.** Beschichtungszusammensetzung gemäß einem der vorstehenden Ansprüche, die im trockenen Zustand eine Farbe aufweist, die den folgenden Kriterien genügt:

$$C^* < C_{kritisch} \text{ und}$$

$$Y > mC^* + 35$$

wenn unter Verwendung von m und $C_{kritisch}$ gemäß der folgenden Tabelle berechnet wird:

| Farbwinkel h* | M | C_{kritisch} |
|---|---|---|
| 0 | 0,098 | 39,063 |
| 10 | 0,063 | 42,739 |
| 20 | 0,231 | 40,130 |
| 30 | 0,399 | 37,522 |
| 40 | 0,498 | 37,444 |
| 50 | 0,579 | 38,000 |
| 60 | 0,655 | 39,500 |
| 70 | 0,732 | 41,000 |
| 80 | 0,793 | 45,286 |
| 90 | 0,854 | 49,571 |
| 100 | 0,803 | 47,136 |
| 110 | 0,740 | 43,955 |
| 120 | 0,663 | 41,727 |
| 130 | 0,580 | 39,909 |
| 140 | 0,498 | 38,565 |
| 150 | 0,416 | 37,696 |
| 160 | 0,346 | 37,381 |
| 170 | 0,318 | 39,586 |
| 180 | 0,283 | 40,850 |
| 190 | 0,190 | 39,350 |
| 200 | 0,101 | 38,000 |
| 210 | 0,060 | 38,000 |
| 220 | 0,021 | 38,333 |
| 230 | -0,007 | 40,000 |
| 240 | -0,041 | 40,314 |
| 250 | -0,083 | 38,600 |
| 260 | -0,125 | 36,886 |
| 270 | -0,167 | 35,171 |
| 280 | -0,152 | 34,640 |
| 290 | -0,131 | 34,240 |
| 300 | -0,079 | 34,000 |
| 310 | 0,016 | 34,000 |

(fortgesetzt)

| Farbwinkel h* | M | $C_{kritisch}$ |
|---|---|---|
| 320 | 0,112 | 34,000 |
| 330 | 0,207 | 34,000 |
| 340 | 0,235 | 34,471 |
| 350 | 0,161 | 35,647 |
| 360 | 0,098 | 39,063 |

**10.** Beschichtungszusammensetzung gemäß Anspruch 9, die einen C*-Wert von weniger als 5 und einen Y-Wert von mehr als 85 aufweist.

**11.** Beschichtungszusammensetzung gemäß einem der vorstehenden Ansprüche, die weiterhin Bestandteile umfasst, die aus der Gruppe ausgewählt sind, die aus Schaumverhütungsmitteln, Entschäumern, Bioziden, Koaleszenzlösemitteln, Weichmachern, Rheologiehilfsmitteln, Rheologiemodifikatoren, Dispergiermitteln und Tonen besteht.

**12.** Verfahren zur Beschichtung eines Artikels oder einer Struktur, die eine Oberfläche aufweist, mit einer Zusammensetzung gemäß einem der vorstehenden Ansprüche, umfassend die Schritte des Auftragens wenigstens einer flüssigen Schicht der Beschichtung durch Bürste, Rolle, Kissen oder Spray und des Trocknenlassens oder Trocknens und/oder Härtens der Schicht.

**13.** Artikel oder Struktur, die eine Oberfläche aufweist, welche mit einer Zusammensetzung gemäß einem der Ansprüche 1 bis 11 beschichtet ist.


**Revendications**

**1.** Composition aqueuse de revêtement pigmentée comprenant
un liant polymère particulaire filmogène, comprenant un polymère de styrène-acrylique, et
un matériau particulaire non filmogène dans des quantités donnant une teneur en volume de pigment de 75 à 90 %, dans laquelle le matériau non filmogène calculé sur le volume total de matière sèche comprend

    a) des particules de pigment opacifiantes comprenant

        i) 2 à 8 % de $TiO_2$
        ii) 5 à 15 % de particules sphériques polymères creuses

    et

    b) des particules de charge non opacifiantes comprenant

        i) 10 à 40 % de carbonate de calcium-magnésium
        ii) 10 à 25 % de carbonate de calcium
        iii) 5 à 20 % de talc

    et dans laquelle la composition est dépourvue de billes de polymère vésiculées pigmentées.

**2.** Composition de revêtement selon la revendication 1, qui est dépourvue de particules de polymère solides non filmogènes.

**3.** Composition de revêtement selon la revendication 1 ou la revendication 2, qui est dépourvue d'argile calcinée.

**4.** Composition de revêtement selon la revendication 3, dans laquelle le rapport entre les monomères de styrène et d'acrylique dans le polymère est de 2 : 1 à 0,5 : 1, calculé sur une base de % en poids.

**5.** Composition de revêtement selon l'une quelconque des revendications précédentes, dans laquelle les particules opacifiantes sont constituées de 2 à 8 % de $TiO_2$ et de 5 à 15 % de particules sphériques polymères creuses.

**6.** Composition de revêtement selon l'une quelconque des revendications précédentes, dans laquelle le carbonate de calcium-magnésium comprend un mélange d'une première poudre et d'une seconde poudre, la première ayant une taille moyenne de particule de 2 à 10 $\mu$m et la seconde ayant une taille moyenne de particule de 15 à 35 $\mu$m.

**7.** Composition de revêtement selon la revendication 6, dans laquelle le rapport entre les deux poudres est de 25 : 75 à 75 : 25 en poids.

**8.** Composition de revêtement selon l'une quelconque des revendications précédentes, dans laquelle le degré de brillance est inférieur à 15 %, mesuré à 85° à l'aide d'un lampromètre.

**9.** Composition de revêtement selon l'une quelconque des revendications précédentes, ayant une couleur à l'état sec, satisfaisant les critères suivants

$$C^* < C_{critique} \text{ et}$$

$$Y > mC^* + 35$$

calculés en utilisant m et $C_{critique}$ selon le tableau ci-dessous

| Angle de teinte h* | M | $C_{critique}$ |
|---|---|---|
| 0 | 0,098 | 39,063 |
| 10 | 0,063 | 42,739 |
| 20 | 0,231 | 40,130 |
| 30 | 0,399 | 37,522 |
| 40 | 0,498 | 37,444 |
| 50 | 0,579 | 38,000 |
| 60 | 0,655 | 39,500 |
| 70 | 0,732 | 41,000 |
| 80 | 0,793 | 45,286 |
| 90 | 0,854 | 49,571 |
| 100 | 0,803 | 47,136 |
| 110 | 0,740 | 43,955 |
| 120 | 0,663 | 41,727 |
| 130 | 0,580 | 39,909 |
| 140 | 0,498 | 38,565 |
| 150 | 0,416 | 37,696 |
| 160 | 0,346 | 37,381 |
| 170 | 0,318 | 39,586 |
| 180 | 0,283 | 40,850 |
| 190 | 0,190 | 39,350 |
| 200 | 0,101 | 38,000 |

(suite)

| Angle de teinte h* | M | $C_{critique}$ |
|---|---|---|
| 210 | 0,060 | 38,000 |
| 220 | 0,021 | 38,333 |
| 230 | -0,007 | 40,000 |
| 240 | -0,041 | 40,314 |
| 250 | -0,083 | 38,600 |
| 260 | -0,125 | 36,886 |
| 270 | -0,167 | 35,171 |
| 280 | -0,152 | 34,640 |
| 290 | -0,131 | 34,240 |
| 300 | -0,079 | 34,000 |
| 310 | 0,016 | 34,000 |
| 320 | 0,112 | 34,000 |
| 330 | 0,207 | 34,000 |
| 340 | 0,235 | 34,471 |
| 350 | 0,161 | 35,647 |
| 360 | 0,098 | 39,063 |

**10.** Composition de revêtement selon la revendication 9, ayant une valeur C* inférieure à 5 et une valeur Y supérieure à 85.

**11.** Composition de revêtement selon l'une quelconque des revendications précédentes, et comprenant en outre des ingrédients choisis dans le groupe constitué par les agents anti-mousse, les agents démoussants, les biocides, les solvants coalescents, les plastifiants, les fluidifiants, les modificateurs de rhéologie, les dispersants et les argiles.

**12.** Procédé de revêtement d'un article ou d'une structure ayant une surface avec une composition telle que définie dans l'une quelconque des revendications précédentes incluant les étapes consistant à appliquer au moins une couche liquide du revêtement par brosse, rouleau, patin ou pulvérisation ; permettre ou provoquer le séchage et/ou le durcissement de la couche.

**13.** Article ou structure ayant une surface revêtue avec une composition telle que définie dans l'une quelconque des revendications 1 à 11.

Fig. 1

**EP 2 182 033 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4277385 A
- EP 0113435 A

### Non-patent literature cited in the description

- Paint and Surface Coatings - theory and practice. John Wiley and Sons, 35-37
- International Lighting Vocabulary. 1987